# EUROPEAN PATENT APPLICATION

(11) **EP 4 339 161 A1**
(43) Date of publication of application: **20.03.2024**
(21) Application number: 23158962.3
(22) Date of filing: 28.02.2023
(51) Int. Cl.: C01G 39/00, B60L 7/22, H01M 4/131, H01M 4/485, H01M 10/052, H01M 10/42, H01M 50/204, H01M 50/249

(54) **ACTIVE MATERIAL, ELECTRODE, SECONDARY BATTERY, BATTERY PACK, AND VEHICLE**

(30) Priority: 16.09.2022 JP 2022147941; 21.02.2023 JP 2023025428
(71) Applicant: KABUSHIKI KAISHA TOSHIBA, Minato-ku Tokyo 105-0023 (JP)
(72) Inventor: Ise, Kazuki, Tokyo, 105-0023 (JP); Hoshina, Keigo, Tokyo, 105-0023 (JP); Harada, Yasuhiro, Tokyo, 105-0023 (JP); Takami, Norio, Tokyo, 105-0023 (JP)
(74) Representative: Hoffmann Eitle

(57) **Abstract**

According to one approach, an active material including a composite oxide is provided, where the composite oxide has a crystal structure including a rhenium oxide block structure that contains octahedral structures configured of oxygen and a metal element and that is configured by the octahedral structures sharing vertices. The composite oxide is represented by general formula LiₐM_{b}NbMo_{c}O_{d}. Here, M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.5, 0 ≤ c ≤ 0.5, and 2.33 ≤ d/(1+b+c) ≤ 2.50. In a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.

## Description

### FIELD

The present disclosure relates to an active material, electrode, secondary battery, battery pack, and vehicle.

### BACKGROUND

In recent years, as a high energy density battery, secondary batteries such as a lithium-ion secondary battery or a nonaqueous electrolyte secondary battery have been actively studied and developed. The secondary battery is anticipated as a power source for vehicles such as hybrid automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well.

One typical negative electrode adopted in a lithium ion battery is a carbon-based negative electrode which uses a carbonaceous material, such as graphite, as an active material. When a battery using a carbon-based negative electrode is repeatedly charged and discharged at a rapid rate, precipitation of dendrites of metallic lithium on the electrode may occur, raising a concern of heat generation or ignition due to internal short circuit. To address this concern, a battery has been developed which uses a metal composite oxide in a negative electrode in place of a carbonaceous material to thereby increase the operation potential of the negative electrode. For example, a battery using a spinel-type lithium titanium composite oxide Li₄Ti₅O₁₂ in the negative electrode has a high average operating potential of 1.55V (vs. Li/Li⁺). Therefore, such a battery can be rapidly and stably charged and discharged, because precipitation of Li dendrites does not proceed, and also has a longer life than that of a battery which uses a carbon-based negative electrode, because Li₄Ti₅O₁₂ operates at a potential at which reductive side reactions of an electrolyte solution hardly occurs. However, a battery using Li₄Ti₅O₁₂ in the negative electrode has a drawback in that the theoretical capacity of the active material is as low as 175 mAh/g, and so, the energy density of the battery is lower than that of a battery having a carbon-based negative electrode .

For this reason, use of a monoclinic niobium titanium oxide TiNb₂O₇ has been considered. TiNb₂O₇ is an active material which exhibits high capacity while having an operating potential near 1 V (vs. Li/Li⁺) based on the oxidation-reduction potential of lithium. Thus, an electrode with TiNb₂O₇ is expected to achieve a volume energy density beyond that of the carbon-based negative electrode. However, for full-scale commercialization of electric vehicles, further enhancement of the energy density of lithium ion secondary batteries is desired in view of achieving increased traveling distance, etc., and thus, development of a rapid-charge battery having even higher capacity is being desired.

### BRIEF DESCRIPTION OF THE DRAWINGS

FIG. 1 is a schematic diagram showing an example of a crystal structure that may be included in a composite oxide included in an active material according to an approach;
FIG. 2 is a schematic diagram showing an example of a crystal structure that is included in a composite oxide included in the active material according to the approach;
FIG. 3 is a cross-sectional view schematically showing an example of a secondary battery according to an approach;
FIG. 4 is an enlarged cross-sectional view of section A of the secondary battery shown in FIG. 3;
FIG. 5 is a partially cut-out perspective view schematically showing another example of the secondary battery according to an approach;
FIG. 6 is an enlarged cross-sectional view of section B of the secondary battery shown in FIG. 5;
FIG. 7 is a perspective view schematically showing an example of a battery module according to an approach;
FIG. 8 is an exploded perspective view schematically showing an example of a battery pack according to an approach;
FIG. 9 is a block diagram showing an example of an electric circuit of the battery pack shown in FIG. 8;
FIG. 10 is a partially see-through diagram schematically showing an example of a vehicle according to an approach;
FIG. 11 is a diagram schematically showing an example of a control system related to an electric system in the vehicle according to an approach; and
FIG. 12 is a graph showing a Raman spectrum obtained in Examples 1 to 3 and Comparative Example 1.

### DETAILED DESCRIPTION

According to one approach, an active material including a composite oxide is provided, where the composite oxide has a crystal structure including a rhenium oxide block structure that contains octahedral structures configured of oxygen and a metal element and that is configured by the octahedral structures sharing vertices. The composite oxide is represented by general formula LiₐM_{b}NbMo_{c}O_{d}. Here, M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.5, 0 ≤ c ≤ 0.5, and 2.33 ≤ d/(1+b+c) ≤ 2.50. In a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.

According to another approach, provided is an electrode including the above active material.

According to a further other approach, provided is a secondary battery including a positive electrode, a negative electrode, and an electrolyte. The positive electrode or the negative electrode includes the above electrode.

According to a still another approach, provided is a battery pack including the above secondary battery.

In addition, according an approach, provided is a vehicle including the above battery pack.

According to the above approaches, provided is an active material and electrode that can realize a secondary battery with superior rapid charge-discharge performance and cycle life performance, a secondary battery and battery pack with superior rapid charge-discharge performance and cycle life performance, as well as a vehicle including the battery pack.

In order to obtain a high-capacity material, a material capable of a large amount of charge compensation upon insertion of carrier ions (e.g., lithium ions) is desirably selected. Thus, a composite oxide containing, for example, a hexavalent element molybdenum (Mo) may be adopted as a compound having a higher capacity. However, as a molybdenum-niobium composite oxide material, no report of a battery material having a large content ratio of molybdenum has been made.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

### (First Approach)

According to a first approach, provided is an active material including a composite oxide that includes a crystal structure. The crystal structure includes a rhenium oxide-type block structure configured by sharing of vertices by octahedral structures configured of oxygen and a metal element. The composite oxide is represented by general formula LiₐM_{b}NbMo_{c}O_{d}. In the general formula, M is at least one selected from the group consisting of Ti, V, Ta, Fe, Co, Mn, Ni, Bi, Sb, As, P, Cr, W, B, Na, K, Mg, Al, Ca, Y and Si. Each of the subscripts in the formula respectively satisfies, 0 ≤ a ≤ b+2+3c, 0 ≤ b ≤ 1.5, 0 ≤ c ≤ 0.5, and 2.33 ≤ d/(1+b+c) ≤ 2.50. In a micro-Raman spectrum with an excitation wavelength of 532 nm for the composite oxide, a difference S2-S1 between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.

The above subscript b may alternatively be within the range of 0 ≤ b ≤ 1.4.

The active material may be an active material for a battery. The active material may be, for example, an electrode active material used in an electrode of secondary battery such as a lithium ion battery, a nonaqueous electrolyte battery, etc. More specifically, the active material may be, for example, a negative electrode active material used in the negative electrode of a secondary battery.

A secondary battery that is superior in both rapid charge-discharge performance and cycle life performance can be realized by using, as an electrode active material, a composite oxide represented by the above general formula LiₐM_{b}NbMo_{c}O_{d} (element M and each subscript being those mentioned above; to be abbreviated, hereinafter), having the above-mentioned crystal structure including the rhenium oxide-type block structure, and the above Raman peak P1 and Raman Peak P2 in the Raman spectrum satisfying the shift difference S2-S1.

### <Crystal Structure>

The composite oxide included in the active material according to the first approach corresponds to one portion of oxide materials having a structure of a Wadsley-Roth phase, which is a crystal phase among niobium-containing oxide materials. The Wadsley-Roth phase has been reported to take a crystal structure with a ratio of oxygen O to a metal element M in the composition that is in the range of 2.33 ≤ A_{O}/ A_{M} ≤ 2.65, assuming Ao and A_{M} as representing the number of atoms of oxygen and the number of atoms of the metal element, respectively. For example, TiNb₂O₇ has a crystal structure on the reduced side where A_{O} / A_{M} = 2.33.

Herein, "reduced" means that the proportion of oxygen within the structure is low. The Wadsley-Roth phase takes a crystal structure in which a structure with vertex-sharing oxygen-metal octahedra forms a rhenium oxide-type block structure, and the blocks share the rhombohedra of the octahedra or a tetrahedron is interposed between the blocks and shares vertices to thereby connect the rhenium oxide-type blocks (ReO₃-type blocks) in a two-dimensional direction. The crystal structure on the reduced side takes a structure with small rhenium oxide-type blocks. Although the rhenium oxide-type crystal structure has cavities into which a large amount of Li can be inserted, the crystal structure is highly symmetric; thus, a change in the bond length between the metal element and oxygen for resolving the charge repulsion occurring upon Li insertion hardly occurs. As such, the rhenium oxide-type crystal structure can be said to be a structure which restricts Li insertion, due to the charge repulsion occurring upon Li insertion. With the crystal structure on the reduced side, the ratio A_{O}/A_{M} becomes small, and thus the number of oxygen in the structure is reduced, leading to reduction of the size of the rhenium oxide-type blocks. Accordingly, there may be obtained a crystal structure capable of volume expansion due to a change in the bond length between the metal element and oxygen when Li is inserted. Therefore, while having a wide cavity by including the rhenium oxide-type crystal structure, Li insertion in great amount can be accomplished since there is no restriction on the structural change occurring when Li is inserted.

With the composite oxide included in the active material according to the first approach, as well, by taking a reduced-side crystal structure as with TiNb₂O₇, insertion of greater amounts of lithium (Li) into the crystal structure has become possible, and thus a crystal structure with a large reversible capacity has been achieved. Namely, the crystal structure of the composite oxide is a crystal structure of a reduced side belonging to the Wadsley-Roth phase consisting of three elements including molybdenum and metal element M in addition to niobium.

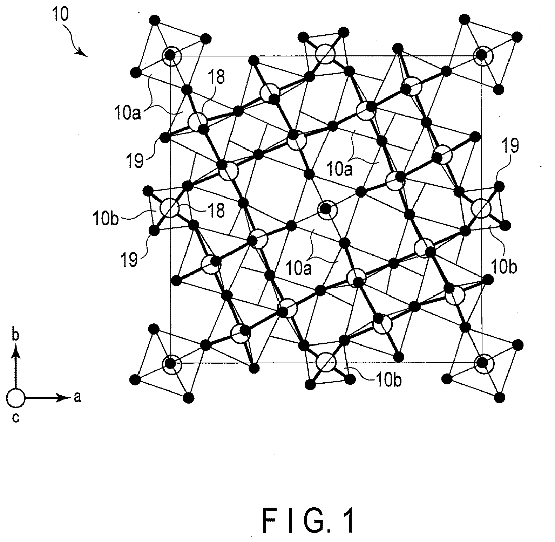

FIG. 1 shows a schematic view of an example of a crystal structure that may be included in the composite oxide represented by the general formula LiₐM_{b}NbMo_{c}O_{d}. This example corresponds to a crystal structure in which a ratio of the number of atoms Ao of oxygen O to the number of atoms A_{M} of the metal element M included as constituent elements is A_{O}/A_{M} = 2.50. In FIG. 1, the crystal structure is presented in terms of a unit lattice in the [001] direction, as viewed along the c-axis direction. The notation of space group of the crystal structure belongs to I-4, and the space group number thereof is attributed to 82. The "space group" as mentioned herein corresponds to the content of "International Tables for Crystallography", specifically, the content of Vol. A: Space-group symmetry (Second online edition (2016); ISBN: 978-0-470-97423-0, doi: 10.1107/97809553602060000114) of this document. The space group can also be described, however, as being based on a simple cubic lattice having four-fold rotation axis or four-fold rotoinversion axis similar to the I⁻4 (space group No. 82), such as P4 (space group No. 75), 14 (space group No. 79), P-4 (space group No. 81), P4₂/n (space group No. 86), I4/m (space group No. 87), P4nc (space group No. 104), P⁻42₁c (space group No. 114), and P⁻4n2 (space group No. 118) . The space group may vary when the composition ratio deviates from a stoichiometric composition ratio due to adjustment thereof or when structural distortion occurs due to the presence of a heterogeneous phase. The crystal structure 10 includes octahedra 10a and tetrahedra 10b each configured of a metal element 18 and oxygen 19. The octahedra 10a are coupled to each other via sharing vertices, thereby forming a rhenium oxide-type block (ReO₃-type block) . The size of the block corresponds to 3 × 3 = 9 octahedra 10a. The rhenium oxide-type nonuplet block forms a plane in the a-axis direction and the b-axis direction by either sharing the edges of the octahedra 10a or sharing the vertices of the tetrahedra 10b. A plurality of planes including the nine octahedra 10a are connected to each other by sharing the edges of the octahedra or the vertices of the tetrahedra also towards the c-axis side, thereby forming the crystal structure.

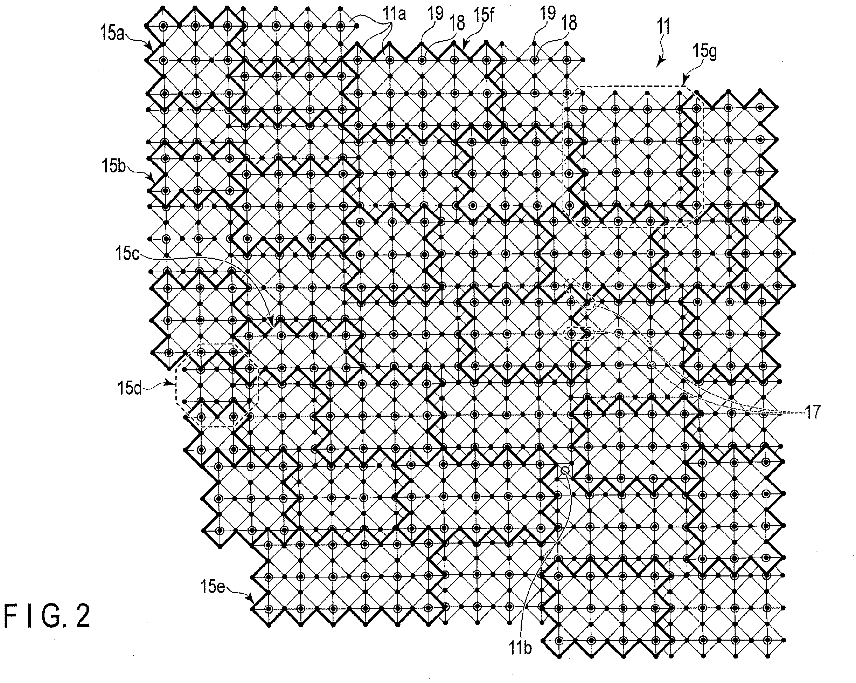

FIG. 2 shows a schematic view of another example of a crystal structure that may be included in the composite oxide represented by the general formula LiₐM_{b}NbMo_{c}O_{d}. FIG. 2 shows the structure as viewed from the stacking direction of the ReO₃ blocks. In the crystal structure 11, the ReO₃ blocks (e.g. , block 15a) surrounded by the thick lines and the ReO₃ blocks (e.g., block 15d) indicated just by the thin lines differ in the planes in which the metal elements 18 are arranged. The feature of this example is that the structure does not have periodicity. Blocks having different sizes are connected and present according to the Wadsley-Roth phase arrangement form. A small block has a side of two octahedra, and a large block has a side of six octahedra. For example, block 15a consists of 3 × 3 octahedra 11a, block 15b consists of 2 × 3 octahedra 11a, block 15c consists of 2 × 4 octahedra 11a, block 15d consists of 2 × 2 octahedra 11a, block 15e consists of 3 × 6 octahedra 11a, block 15f consists of 5 × 3 octahedra 11a, and block 15g consists of 4 × 4 octahedra 11a. The sizes may be adjusted freely according to a metal/oxygen ratio dependent on a mixing state of elements M, Nb and Mo, and are not limited. A majority of the blocks are connected by sharing edges 17 of the octahedra, and a part of the connections may include that by sharing vertices of the tetrahedra 11b. The number of tetrahedra is fewer as compared to that of FIG. 1, and by thus having the connection via the vertices of the tetrahedra replaced by the connection via the edges of the octahedra, the number of edge-sharing octahedra is increased, leading to increase in octahedron lattice distortion. Because of the increase in octahedron lattice distortion, structural alleviation through change in the bond length upon Li insertion is facilitated, and the insertion amount of Li can be increased. Furthermore, since edge-sharing of octahedra are included without having a periodic structure, the asymmetry of the framework can be maintained even with the insertion amount of Li being increased. Thus, the crystal structure of FIG. 2 has a further improved reversible capacity as compared with the crystal structure of FIG. 1. Accordingly, by including the crystal structure of FIG. 2 in the active material, the capacity can also be improved.

With the crystal structure of FIG. 2, the metal/oxygen ratio that varies due to a change in the composition ratio can be adjusted by changing the size of the ReO₃ block and the number of connections by the edge-sharing octahedra and vertex-sharing tetrahedra. Therefore, the oxygen/metal ratio can be changed depending on the composition ratio, and can be adjusted freely within the composition range of the general formula LiₐM_{b}NbMo_{c}O_{d}.

Molybdenum (Mo) can be incorporated into the crystal structure not only in the form of a hexavalent element but also in the form of a tetravalent or pentavalent element. The valence of Mo is determined in such a manner that the charge balance is adjusted in accordance with the oxygen amount and the mixing amount of metal elements other than Mo in the crystal structure shown in FIG. 1 or FIG. 2. With the hexavalent element, the charge compensation with the M element such as Ti at the time of Li insertion is a three-electron reaction, and thus, the theoretical capacity of Li capable of being inserted can be improved. Mo as a tetravalent or pentavalent element is arranged within the crystal structure in such a manner that electrons are supplied to the d band. Therefore, by including tetravalent or pentavalent Mo, the electrical conductivity can be changed to improve battery performance. The Wadsley-Roth phase including molybdenum is known to have increased operating potential (i.e., become noble). Comparing oxides containing titanium and niobium against each other, for example, with the titanium-niobium-molybdenum composite oxide, which is one aspect according to the first approach, by virtue of having the crystal structure including molybdenum at a high concentration, the operating potential can be made higher than that of TiNb₂O₇. As a result, the operating potential falls within a potential region where there is little reductive side reactions of the electrolyte solution, and thus, high life performance can be achieved.

In the active material, by having Schottky defects being formed, the cycle life performance is improved. In Schottky defects, not only do oxygen defects occur, but additionally, Mo elements are lost so as to adjust the charge balance, and vacancies are formed. When inserting Li, because defect portions in the material have less charge repulsion, Li can be easily trapped. Thus, an effect where some of Li are not extracted but remain in the active material during discharge is exhibited. An influence thereof is obtaining of an effect where the reduction in electron conductivity after Li extraction is suppressed, which makes possible a maintaining of an electron conductivity path inside active material secondary particles and among active material particles when Li insertion/extraction is repeated. As a result, the cycle life performance of the electrode can be improved.

Through the above effect, the electron conductivity of the active material improves due to formation of defects, thereby improving the battery performance. On the other hand, if an excessive amount of defects is formed, the trapped Li inhibits internal diffusion; thus, the charge-discharge rate cannot be increased without limit.

In the general formula LiₐM_{b}NbMo_{c}O_{d}, the subscript d reflects the amount of oxygen defects.

In the active material, molecular vibration derived from the bond of Mo-O varies due to introduction of defects. Accordingly, quantitative evaluation of defects can be performed through micro-Raman spectrometry. Specifically, in micro-Raman spectrometry using an excitation wavelength of 532 nm for the active material, a difference S2-S1 between a shift S1 (cm⁻¹) of a Raman peak P1 derived from a Mo-O bond and a shift S2 (cm⁻¹) of a Raman peak P2 derived from a Nb-O bond, among Raman peaks derived from bonding between a transition metal and oxygen derived from the crystal structure, is 285 cm⁻¹ or more. The Raman peak P1 indicates a peak derived from the bonds of octahedra including an Mo element. The shift S1 indicates a peak top position of the Raman peak P1 and is within the range of 640 ± 10 cm⁻¹. The Raman peak P2 indicates a peak derived from the bonds of vertex-sharing Nb-O octahedra. The shift S2 indicates a peak top position of the Raman peak P2 and is within the range of 920 ± 20 cm⁻¹. Because of defects of Mo, the Raman peak P1 is shifted to the low energy side. By having a state in which the Raman peak P1 is shifted to the low energy side by 285 cm⁻¹ or more with respect to the Raman peak P2, the active material can achieve the above-described advantageous effects. The larger the shift difference S2-S1, the larger the amount of defects. In view of rapid charge-discharge performance, the shift difference S2-S1 of 290 cm⁻¹ or less is preferable. As micro-Raman spectrometry, for example, a method described later is used.

The composite oxide represented by the general formula LiₐM_{b}NbMo_{c}O_{d} may further include as metal elements, in addition to the Nb element and the Mo element, element M that differs from them. In the case of the structure of FIG. 2, in accordance to the change in the oxygen/metal composition ratio due to the charge compensation, through the change in the size of the ReO₃-type block and change in the number of edge-sharing octahedra and the vertex-sharing tetrahedra at the connecting sections, the structure can be maintained. The Mo element can be included in the structure having the valence within the structure adjusted within the range of tetravalent to hexavalent. Furthermore, with the active material, Schottky defects can be formed easily in the structure, as described above. Therefore, the degree of liberty in adjusting the charge balance in the structure is high, and the element M can thus be selected freely. As the M element, at least one can be selected from the group consisting of Ti, V, Ta, Fe, Co, Mn, Ni, Bi, Sb, As, P, Cr, W, B, Na, K, Mg, Al, Ca, Y, Zr and Si. In the above-described general formula, the subscript b may, for example, satisfy 0 < b.

The above-described M element may be included within the crystal structure as a metal element constituting the above-described tetrahedra or octahedra. Also, the M element may be present in the active material in the form of not being included in the crystal structure of the composite oxide.

For example, vanadium (V) and phosphorus (P) can be incorporated into the crystal structure as pentavalent elements. Titanium (Ti), zirconium (Zr) and silicon (Si) can be incorporated into the structure as tetravalent elements. Iron (Fe), chromium (Cr), aluminum (Al), bismuth (Bi), antimony (Sb), boron (B), arsenic (As), cobalt (Co), manganese (Mn), nickel (Ni) and yttrium (Y) can be incorporated into the crystal structure as trivalent elements. Magnesium (Mg) and calcium (Ca) can be incorporated into the crystal structure as divalent elements. Potassium (K) and sodium (Na) can be incorporated into the crystal structure as monovalent elements. Among these elements, a tetravalent element has a higher charge than an element of a valence of 3 or less; thus, a tetravalent element can be contained in a large amount without reducing the oxygen/metal ratio in the structure, allowing the Mo ratio in the structure to be increased, and is therefore preferable. In particular, titanium (Ti) is an element that can be contained in the structure in the largest amount and be easily incorporated into the structure since the ionic radius is close to that of the pentavalent Nb element, and therefore most preferred among the M elements.

Tantalum (Ta) as a pentavalent element can substitute Nb. Since Ta and Nb belong to the same group in the periodic table, they have similar physical and chemical properties. Thus, even if Nb is substituted by Ta, equivalent battery performance can be achieved.

Tungsten (W) as a hexavalent element can substitute Mo in part. In general, the W-containing Wadsley-Roth phase is known to have a high rate performance because of its high in-solid Li diffusion rate. Therefore, containing W can further enhance the rate performance of the active material.

### <Active Material Particles>

The active material according to the first approach may be in a particulate form, for example. Namely, the active material may be formed of particles of a composite oxide represented by the general formula LiₐM_{b}NbMo_{c}O_{d} and including the crystal structure described above. The active material may be in the form of discrete primary particles, secondary particles formed of agglomerated primary particles, or a mixture of the primary particles and the secondary particles. An average primary particle size of the active material is preferably 10 µm or less, more preferably 5 µm or less, and still more preferably 3 µm or less. With the average primary particle size of the active material being small, the distance of diffusion of lithium ions in the primary particles is short, and thus the diffusivity of lithium ions tends to improve. In addition, with the average primary particle size of the active material being small, the reaction area increases, and thus the reactivity between the active material and lithium ions increases, whereby insertion-extraction reaction of lithium ions tends to improve.

An average secondary particle size of the active material is preferably from 1 µm to 50 µm. By having the average secondary particle size of the active material being within this range, the productivity at the time of manufacturing an electrode can be improved, and also, a battery with favorable performance can be obtained. The average secondary particle size refers to a particle size at which a cumulative volume value is 50% in a particle size distribution obtained using a laser diffraction particle size analyzer.

The BET specific surface area of the active material is preferably from 3.0 m²/g to 120 m²/g, and more preferably from 4.0 m²/g to 110 m²/g. When an active material having a high specific surface area is used, the discharge rate performance of the battery can be increased. When an active material having a low specific surface area is used, the life performance of the battery can be improved, and the coatability of a slurry including the active material can be made favorable in the process of producing an electrode, which will be described later in the second approach.

The BET specific surface area refers to a specific surface area obtained by a nitrogen BET (Brunauer, Emmet and Teller) method. The method for obtaining the specific surface area based on the nitrogen BET method will be described in detail, later.

### <Production Method>

The active material according to the first approach can be produced as described below.

### (Liquid Phase Synthesis)

Production of the composite oxide is not particularly limited; however, the composite oxide may be synthesized by, for example, a solid-phase reaction method, a sol-gel method, a hydrothermal synthesis method, or the like. A production method of a titanium-niobium-molybdenum composite oxide (i.e. , element M = Ti) adopting a sol-gel method will be described as an example.

As starting materials, a titanium compound, a niobium compound, and a molybdenum compound are used. Examples of the titanium compound include titanium tetraisopropoxide, titanyl sulfate, titanium chloride, titanium ammonium oxalate and a hydrate thereof, titanium hydroxide, and titanium oxide. Examples of the niobium compound include niobium chloride, niobium ammonium oxalate and a hydrate thereof, niobium hydroxide, and niobium oxide. Examples of the molybdenum compound include molybdenum chloride, ammonium molybdate and a hydrate thereof, molybdenum hydroxide, and molybdenum oxide. In a case where an element other than Ti is selected or another element is selected together with Ti as the element M, the above titanium compounds are replaced with a compound containing the selected element M as appropriate or the compound containing the selected element M is used together with the titanium compound(s).

The starting materials are preferably dissolved in pure water or an acid in advance to form a solution. By forming a solution, a dry gel in which respective elements are uniformly mixed can be obtained, so that the reactivity can be enhanced. When the starting materials cannot be dissolved in pure water, an acid is used to dissolve them.

Examples of the acid to be used to dissolve the starting materials include citric acid and oxalic acid, and oxalic acid is preferably used in view of solubility. When oxalic acid is used, for example, the concentration is preferably set to 0.5 M to 1 M. The starting materials are preferably dissolved at a temperature of 70°C or higher in order to reduce the reaction time.

If dissolving of the starting materials is difficult, a dispersion liquid can be formed to proceed with the reaction. In this case, the average particle size of the starting materials included in the dispersion liquid is favorably 3 µm or less, and more preferably 1 um. After a solution (or a dispersion liquid) in which the respective compounds are adjusted to a predetermined composition ratio is prepared, neutralization using an aqueous solution of ammonia is performed while heating and stirring the solution, to thereby adjust the pH. A gel liquid is obtained by adjusting the pH. By setting the pH to 5 to 8, a gel which uniformly contains the respective starting materials can be formed, whereby a dry gel which exhibits favorable reactivity during firing can be obtained.

Subsequently, the gel liquid is heated up to a temperature close to a boiling point to evaporate moisture, thereby making gelation progress. After gelation, moisture is further evaporated to perform drying, whereby a dry gel is obtained. When performing gelation and drying, for example, the whole solution may be concentrated by evaporation to obtain a dry gel. The average particle size of the dry gel produced by evaporating and concentrating the whole solution is preferably reduced to 10 um or less, and more preferably 5 um or less by performing pulverization before the firing. Thereby, the particle size after the firing can be made small. The dry gel thus obtained is fired.

In the processes of gelation and obtaining the dry gel by evaporating the solvent, a spray dryer is preferably used. This is because, fine droplets of sol solution can be formed by spraying. Drying in the state of fine droplets makes it possible to dry while preventing particle aggregation that proceeds when drying the solvent, and thus, the particle size after drying can be made smaller and coarse particles can also be reduced. Thereby, uniformity of the reaction can be made high when firing the precursor, and also, aggregation of particles during the firing can be suppressed. The drying temperature when spray drying is preferably from 100°C to 200°C.

When firing the dry gel, pre-firing is performed at a temperature of 200°C to 500°C for 1 hour to 10 hours. Thereby, excess organic components can be eliminated, which makes it possible to enhance the reactivity during the main firing.

The main firing is preferably performed at a temperature of 700°C to 900°C for 1 hour to 10 hours. By performing firing in such a temperature range, the above-mentioned defects can be suitably introduced while obtaining a target phase. The amount of defects tends to be greater with a higher firing temperature.

The powder after the firing may have a high average particle size due to formation of agglomerates. In this case, pulverizing is preferably performed to adjust a predetermined average particle size.

For a powder subjected to mechanical pulverization, the surface thereof may change to become amorphous. In such a case, overvoltage at the time of Li insertion/extraction may occur when the powder is used as a battery active material, whereby side reactions may increase. Therefore, an anneal treatment is preferably implemented. The anneal temperature is main firing temperature or less, and is preferably 500°C to 800°C.

### <Various Measurement Methods>

Measurement methods for the active material will be explained below. Specifically, examination of the composite oxide, measurement of the average particle size of the active material particles, and measurement of the specific surface area of the active material will be described.

In a case where an active material included in an electrode of a battery is to be taken as a sample, the measurement sample is prepared by performing a pretreatment by the following method. First, the battery is completely discharged. Next, the battery is disassembled in a glove box under an argon atmosphere, and the electrode is taken out. Next, the taken-out electrode is washed using a solvent such as ethyl methyl carbonate. Further processing is performed in accordance with the measurement to be performed, so as to prepare a sample in appropriate form.

### (Examination of Composite Oxide)

Examination as to whether the active material includes the composite oxide having the above-described crystal structure and represented by the general formula LiₐM_{b}NbMo_{c}O_{d} can be made by a combination of a wide-angle X-ray diffraction (XRD) method, High Angle Annular Dark-Field (HAADF) method, inductively coupled plasma (ICP) emission spectrometry, and inert gas dissolution-infrared absorption spectroscopy. The crystal structure can be determined by the wide-angle XRD method and HAADF method, and the elemental composition can be determined by the ICP emission spectrometry and the inert gas dissolution-infrared absorption spectroscopy. Valence measurement of elements can be performed, for example, by X-ray photoelectron spectroscopy (XPS) using a characteristic X-ray.

XRD measurement is performed as follows. First, active material particles are sufficiently pulverized to obtain a powder sample. The average particle size of the powder sample is preferably set to 20 µm or less. The average particle size can be obtained by a laser diffraction particle size distribution measuring apparatus.

Next, the powder sample is packed in the holder portion of a glass sample plate, and the surface is made flat. As the glass sample plate, for example, a glass sample plate whose holder portion has a depth of 0.2 mm may be used.

Next, the glass sample plate is set in a powder X-ray diffraction apparatus, and the XRD spectrum is measured using Cu-Kα rays. Specific measurement conditions are, for example, as follows:
X-ray diffraction apparatus: SmartLab available from Rigaku
X-ray source: Cu-Kα rays
Output: 40 kV, 200 mA
Package measurement name: general-purpose measurement (concentration method)
Incident parallel slit opening angle: 5°
Incident longitudinal restriction slit length: 10 mm
Light-receiving PSA: absent
Light-receiving parallel slit opening angle: 5°
Monochromatization method: Kβ filtering method
Measurement mode: continuous
Incident slit width: 0.5°
Light-receiving slit width: 20 mm
Measurement range (20): 5° to 70°
Sampling width (2θ): 0.01°
Scan speed: 1°/min to 20°/min

The XRD spectrum for the active material is thus obtained. In the XRD spectrum, the abscissa represents the incident angle (2θ), and the ordinate represents the diffraction intensity (cps) . The scan speed may be adjusted within a range where the number of counts for the main peak of the XRD spectrum would be 50 thousand counts or more and 150 thousand counts or less.

When an active material contained in the electrode of a battery is used as a sample, the washed electrode obtained by performing the above pretreatment is cut to about the same area as the area of the holder of the glass sample plate, to thereby obtain a measurement sample.

Next, the obtained measurement sample is directly put onto the glass holder, and XRD measurement is performed. Measurement is performed using the XRD for materials other than the active material that may be contained in the electrode such as a current collector, electro-conductive agent, binder, and the like, thereby ascertaining XRD patterns derived from those materials . Next, if there are overlapping peaks between peaks considered to be derived from the active material and peaks of other materials in the measurement sample, the peaks of the materials other than the active material are separated. The XRD spectrum for the active material is obtained in this manner.

A Rietveld method is used to more precisely ascertain whether the crystal structure of the sample measured belongs to the above-described tetragonal crystal structure of FIG. 1. The ascertainment can be made by examining that a value R_{wp} as a reliability factor is at least 20% or less, more preferably 15% or less using, for example, RIETAN-FP as an analysis program. At this time, if there is a peak including impurities and the peak overlaps with a phase to be analyzed, the analysis precision may be degraded. In this case, analysis is preferably performed with a section that clearly overlaps with the impurities-derived peak excluded from the analysis range. This is not always the case, however, because the intensity ratio varies when a material other than the active material according to the first approach is included in the sample, when the orientation of the sample is significantly high, or when coarse particles are mixed. Therefore, the structure is determined by ascertaining that there is no contradiction in the position or relative intensity of all the peaks attributed to the crystal structure. Also, when the spectrum intensity is low and the background intensity is low, the value R_{wp} may become small. Thus, the reliability factor does not have meaning in its absolute value, but has meaning in relatively determining how well the fitting is under certain measurement conditions.

A detailed explanation of the analysis method using RIETAN-FP is given in, for example, Chapter 9 "Let's use RIETAN-FP" in Izumi Nakai, Fuj io Izumi, "Reality of Powder X-ray Analysis", 1st edition (2002), X-Ray Analysis Investigation Conversazione, The Japan Society for Analytical Chemistry, (Asakura Shoten).

RIETAN-FP is a program for Rietveld analysis available (at least in August 2022) for free on the Internet at the developer's webpage (http://fujioizumi.verse.jp/).

The structure of FIG. 2 is difficult to analyze by XRD measurement since the structure does not have periodicity. In order to ascertain the structure of FIG. 2, the fine structure is preferably observed directly. The observation can be carried out through an observation by the High Angle Annular Dark-Field (HAADF) method using a Scanning Transmission Electron Microscope (STEM). From the perspective of enhancing the measured optical resolution, spherical aberration correction is preferably employed. An atomic image (10 nm × 10 nm) is obtained from a direction perpendicular to the ReO₃-type block, and the positional relationships of the metal elements configuring the ReO₃ block is examined, whereby the structure thereof can be ascertained.

In regard to the content of the respective elements of the active material particles included in the sample, with respect to that of metal elements, the content can be ascertained by the ICP emission spectrometry. With respect to that of the element O, the content can be quantified by a method such as inert gas dissolution-infrared absorption spectroscopy; however, precise quantification is difficult.

For active material particles included in the electrode, after performing the above-described pretreatment, the following treatment is further performed. After washing the electrode, a component containing an active material (e.g. , the active material-containing layer described in the second approach) is dislodged from the current collector of the electrode, for example. The portion dislodged off from the electrode is heated for a short period of time in air (at 500°C for about 1 hour), to sinter off unnecessary portions such as a binder component and carbon. Thereafter, the ICP emission analysis, etc., can be performed to quantify the content of the respective elements.

Measurement of the valence of the metal elements contained in the composite oxide according to the XPS method can be performed as follows. For X-rays used for the measurement, hard X-rays are preferably used because the detection depth is deeper and a state closer to the bulk can be measured. The spectroscopic method using hard X-rays is also called HAXPES. By examining the position of the binding energy in the narrow spectrum of each element, the valence can be determined. For example, for Ti, the Ti2p_{3/2}-derived tetravalent peak is observed at 459.0 ± 0.4 eV. For Mo, the Mo3d_{5/2}-derived hexavalent peak is observed at 232.2 ± 0.4 eV. For Nb, the Nb3d_{5/2}-derived pentavalent peak is observed at 207.5 ± 0.4 eV. Cases where a low-valence element is contained can be determined, as a peak at an energy position lower than the aforementioned valence would be detected. In particular, Mo may include a valence of 5 or less.

The sample is measured in a non-destructive manner so that the element valence does not change. Accordingly, in the measurement of the composite oxide contained in the electrode, the electrode is used as a sample without extracting the materials. The measurement is performed taking precautions so that charge-up during the measurement of the sample does not affect the peak position. In order to prevent peak shift due to charge-up, it is preferable to measure the electrode in a completely discharged state. If the electrode contains an electro-conductive agent, the charge-up can be reduced. Since the element valence also changes if the sample is damaged by long-time X-ray irradiation, precaution should be taken in this respect, as well. Moreover, if materials of different structures coexist, the peak may shift due to a change in the bonding state, and therefore, precaution should be taken to avoid confusion with a change in valence. If elements of different valences coexist, that is, if spectra coexist for plural peaks, the spectra can be separated through least-squares fitting, and the coexistence ratio can be estimated from the area ratio of the separated peaks.

The content of Li represented by the subscript a in the general formula LiₐM_{b}NbMo_{c}O_{d} varies depending on the state of charge of the electrode in which the composite oxide is used as the active material. For example, in the composite oxide contained in the negative electrode, as the battery is charged, Li is inserted and the subscript a increases, and as the battery is discharged, Li is extracted and the subscript a decreases.

### (Raman Spectrometry)

As a method for quantitatively evaluating the crystallinity of the composite oxide included in the active material, measurement using a micro-Raman measurement device may be performed. As the micro-Raman device, for example, LabRAM HR Evolution manufactured by Horiba Ltd. may be used. A wavelength of measurement light source is 532 nm. The conditions of measurement are selected in such a manner that the ratio (S/N ratio) between the peak height (Signal = S) and the noise (Noise = N) on the spectrum and the fluorescence scattering intensity do not affect the calculation of the measured intensity. For the conditions of the measuring, for example, a slit size may be set to 25 um, a laser intensity may be set to 25%, an object lens of 100 times magnification may be used, grating may be set to 1800 gr/mm, an exposure time may be set to 10 s, and a cumulative number may be set to 5.

The intensity is calculated by performing fitting for the measured spectrum. It is preferable that, for example, Lab Spec 6 is used as measurement software, and after the base line is corrected, least-squares fitting using the Gaussian-Lorentz function is performed to thereby calculate Raman shifts (cm⁻¹) of the peaks.

The Raman spectrometry can be performed by, for example, the following procedure.

While the active material can be evaluated directly as long as the material is powdery, in the case of evaluating a battery active material incorporated into a battery, the above-described pretreatment is performed up to washing of the electrode, and the active material is removed from the washed electrode to collect a sample.

With the use of the collected sample, Raman spectrometry is performed under, for example, the conditions described previously.

Upon measurement, a standard sample of Si is used, and according to the method recommended for the device, calibration is performed regarding intensity and Raman shift before performing the measurement. In the case of measurement with powder, the powder is placed on a slide glass for measurement. For easily achieving focus, measurement is preferably performed after flattening so as to reduce unevenness. In the case of measuring a powder containing a binder or an electro-conductive agent component from the electrode, whether Raman activity is shown or not and peak positions are ascertained for the other components included in the electrode mixture such as the electro-conductive agent and the binder. If there is any overlap, a peak relating to components other than the active material is separated.

### (Measurement of Average Particle Size)

The average primary particle size of the active material can be determined by observation using a scanning electron microscope (SEM). Specifically, the average primary particle size by the SEM observation can be calculated by the following method.

First, in a primary particle of a SEM image obtained by the SEM observation, the length of the longest portion and the length of the shortest portion are measured, and the arithmetic mean value of these lengths is calculated as the primary particle size. The measurement of the primary particle size is carried out for 100 indiscriminately selected particles, and the average value thereof is set as the average primary particle size.

The average secondary particle size of the active material can be determined from a particle size distribution measured using a laser diffraction particle size analyzer. As a sample for performing the particle size distribution measurement, used is a dispersion liquid, which is obtained by diluting the active material with N-methyl-2-pyrrolidone such that the concentration of the active material becomes 0.1 mass% to 1 mass%. The particle size at which a cumulative volume value is 50% in the obtained particle size distribution is determined as the average secondary particle size.

### (Measurement of BET specific surface area)

The BET specific surface area for the active material particle can be obtained by the following method.

First, 4 g of the active material are collected as a sample . Next, the evaluation cell of a measuring apparatus is vacuum dried at a temperature of 100°C or more for 15 hours to perform degassing. As the evaluation cell, for example, a 1/2-inch cell, may be used. Next, the sample is placed in the measuring apparatus. As the measuring apparatus, for example, TriStar II 3020 available from Shimadzu-Micromeritics Instrument can be used. Then, in nitrogen gas at 77K (the boiling point of nitrogen), while gradually increasing a pressure P (mmHg) of the nitrogen gas, the nitrogen gas adsorption amount (mL/g) of the sample is measured for each pressure P. Next, a value obtained by dividing the pressure P (mmHg) by a saturated vapor pressure P₀ (mmHg) of the nitrogen gas is defined as a relative pressure P/P₀, and a nitrogen gas adsorption amount corresponding to each relative pressure P/P₀ is plotted, thereby obtaining an adsorption isotherm. A BET plot is calculated from the nitrogen adsorption isotherm and the BET equation, and the specific surface area is obtained using the BET plot. Note that a BET multipoint method is used to calculate the BET plot.

The active material according to the first approach includes a composite oxide having a crystal structure that includes a rhenium oxide block structure and represented by general formula LiₐM_{b}NbMo_{c}O_{d}. The rhenium oxide block structure is configured of octahedral structures sharing vertices, each of which are configured of oxygen and a metal element. In the above general formula, M is one or more selected from the group consisting of Ti, V, Ta, Fe, Co, Mn, Ni, Bi, Sb, As, P, Cr, W, B, Na, K, Mg, Al, Ca, Y and Si. The subscripts a, b, c, and d are numerals satisfying 0 ≤ a ≤ b+2+3c, 0 ≤ b ≤ 1.5, 0 ≤ c ≤ 0.5, and 2.33 ≤ d/(1+b+c) ≤ 2.50. In a micro-Raman spectrum of an excitation wavelength of 532 nm for the composite oxide, between a shift S1 of a Raman peak P1 derived from Mo-O bonds and a shift S2 of a Raman peak P2 derived from Nb-O bonds, there is a difference of 285 cm⁻¹ or more. An electrode using the above composite oxide as the electrode active material exhibits superior rapid charge-discharge performance and cycle life performance. Moreover, a secondary battery and battery pack using the above composite oxide as electrode active material exhibits superior rapid charge-discharge performance and cycle life performance. Namely, the active material has superior rapid charge-discharge performance and cycle life performance.

### (Second Approach)

According to a second approach, an electrode is provided.

The electrode according to the second approach includes the active material according to the first approach. This electrode may be a battery electrode including the active material according to the first approach as a battery active material. The electrode as the battery electrode may be, for example, a negative electrode including the active material according to the first approach as a negative electrode active material. Alternatively, the electrode may be a positive electrode including the active material according to the first approach as a positive electrode active material.

The electrode may include a current collector and an active material-containing layer. The active material-containing layer may be formed on both of reverse surfaces or one surface of the current collector. The active material-containing layer may contain the active material, and optionally an electro-conductive agent and a binder.

The active material-containing layer may contain the active material according to the first approach alone, or may contain two or more species of the active materials according to the first approach. Furthermore, the active material-containing layer may contain a mixture obtained by mixing one specie or two or more species of the active materials according to the first approach with one species or two or more species of other active materials. The contained proportion of the active material(s) according to the first approach with respect to the total mass of the active material(s) according to the first approach and the other active material(s) is desirably 10% by mass or more and 100% by mass or less.

For example, in a case where the active material according to the first approach is included as the negative electrode active material, examples of such other active materials include lithium titanate having a ramsdellite structure (e.g., Li₂₊ₓTi₃O₇, 0 ≤ x ≤ 3), lithium titanate having a spinel structure (e.g., Li₄₊ₓTi₅O₁₂, 0 ≤ x ≤ 3), titanium dioxide (TiO₂), anatase titanium dioxide, rutile titanium dioxide, niobium pentoxide (Nb₂O₅), hollandite titanium composite oxide, orthorhombic titanium composite oxides, monoclinic niobium titanium oxides, niobium oxides, niobium titanium oxides, niobium molybdenum composite oxides, and niobium tungsten composite oxides.

Examples of the orthorhombic titanium-containing composite oxide include a compound represented by Li₂₊ₑM^{I}_{2-f}Ti_{6-g}M^{II}ₕO_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ e ≤ 6, 0 ≤ f < 2, 0 ≤ g < 6, 0 ≤h < 6, and -0.5 ≤ σ ≤ 0.5. Specific examples of the orthorhombic titanium-containing composite oxide include Li₂₊ₑNa₂Ti₆O₁₄ (0 ≤ e ≤ 6) .

Examples of the monoclinic niobium titanium oxide include a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5).

Another example of the monoclinic niobium titanium oxide is a compound represented by LiₓTi_{1-y}M3_{y+z}Nb_{2-z}O_{7-δ}. Here, M3 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle. In addition, the current collecting performance of the active material-containing layer may be improved by coating carbon or an electro-conductive material onto the active material surface together with using the electro-conductive agent (s) .

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

In the case where the active material surface is covered with carbon or an electro-conductive material, the amount of covering material may be assumed to be included in the amount of electro-conductive agent. The amount of coverage by the carbon or electro-conductive material is preferably 0.5% by mass or more and 5% by mass or less. With a coverage amount within this range, the current-collecting performance and electrode density can be made high.

There may be used for the current collector, a material which is electrochemically stable at the potential (vs. Li/Li⁺) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 um to 20 um. The current collector having such a thickness can maintain balance between the strength and weight reduction of the electrode.

The current collector may include a portion where the active material-containing layer is not formed on a surface thereof. This portion may serve as a current collecting tab.

The electrode may be fabricated by the following method, for example. First, active material, electro-conductive agent, and binder are suspended in a solvent to prepare a slurry. The slurry is applied onto one surface or both of reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

The electrode according to the second approach includes the active material according to the first approach. Thus, the electrode according to the second approach can realize a secondary battery with superior rapid charge-discharge performance and cycle life performance.

### (Third Approach)

According to a third approach, there is provided a secondary battery including a negative electrode, a positive electrode, and an electrolyte. As the negative electrode or positive electrode, the secondary battery includes the electrode according to the second approach. That is, the secondary battery according to the third approach includes as a battery electrode, an electrode that includes the active material according to the first approach as a battery active material. A secondary battery of a desirable aspect includes the electrode according to the second approach as the negative electrode. That is, the secondary battery of a desirable aspect includes as the negative electrode, an electrode that includes the active material according to the first approach as a battery active material. Hereinafter, the desirable aspect is described.

The secondary battery may further include a separator provided between the positive electrode and the negative electrode. The negative electrode, the positive electrode, and the separator may configure an electrode group . The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery according to the third approach may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

The negative electrode may, for example, be fabricated by the same method as that for the electrode according to the second approach.

### 2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g. , LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1) .

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}CO_{y}Mn_{z}O₂; 0 < x ≤ 1, 0 < y < 1, 0 < z < 1, y + z < 1). The positive electrode potential can be made high by using these positive electrode active materials.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and lithium bis(fluorosulfonyl)imide (LiN(SO₂F)₂; LiFSI), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC) ; cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE) ; γ-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca) . The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}) ; a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where0.3 ≤ x ≤ 0.7.

One or more among the above compounds may be used as the solid electrolyte. Two or more of the above solid electrolytes may be used, as well.

Alternatively, in place of the nonaqueous electrolyte, a liquid aqueous electrolyte or gel aqueous electrolyte may be used as the electrolyte. The liquid aqueous electrolyte is prepared by dissolving, for example, the above electrolyte salt(s) as solute in an aqueous solvent. The gel aqueous electrolyte is prepared by obtaining a composite of a liquid aqueous electrolyte and the above polymeric material (s) . As the aqueous solvent, a solution including water may be used. The solution including water may be pure water, or may be a mixed solution of water with organic solvent(s).

### 4) Separator

The separator may be made of, for example, a porous film or synthetic resin nonwoven fabric including polyethylene (PE), polypropylene (PP), cellulose, or polyvinylidene fluoride (PVdF) . In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 1% by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

In the above, the aspect including the electrode according to the second approach as the negative electrode has been explained. Of the aspects of the secondary battery according to the third approach, in an aspect including the electrode according to the second approach as the positive electrode, as the negative electrode that is the counter electrode thereto, for example, a counter electrode like the following may be used. At least one electrode selected from lithium metal, lithium metal alloy, graphite, silicon, silicon oxide, tin oxide, tin, and other alloys may be used as the negative electrode. For materials not including lithium within the active material, pre-doping of Li element may be performed, so as to be made useable as negative electrodes.

In the aspect including the electrode according to the second approach as the positive electrode, details of such a positive electrode overlaps with those explained in the second approach, and are therefore omitted.

Next, the secondary battery according to the third approach will be more concretely described with reference to the drawings.

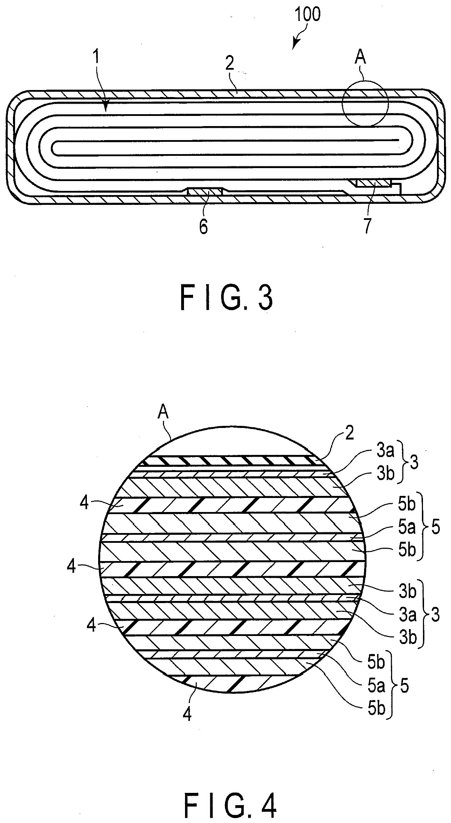

FIG. 3 is a cross-sectional view schematically showing an example of the secondary battery. FIG. 4 is an enlarged cross-sectional view of section A of the secondary battery shown in FIG. 3.

The secondary battery 100 shown in FIGS. 3 and 4 includes an electrode group 1 shown in FIG. 3, a bag-shaped container member 2 shown in FIGS. 3 and 4, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 3, the electrode group 1 is a wound electrode group in a flat form. The wound electrode group 1 in a flat form includes a negative electrode 3, a separator 4, and a positive electrode 5, as shown in FIG. 4. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 4. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces thereof.

As shown in FIG. 3, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

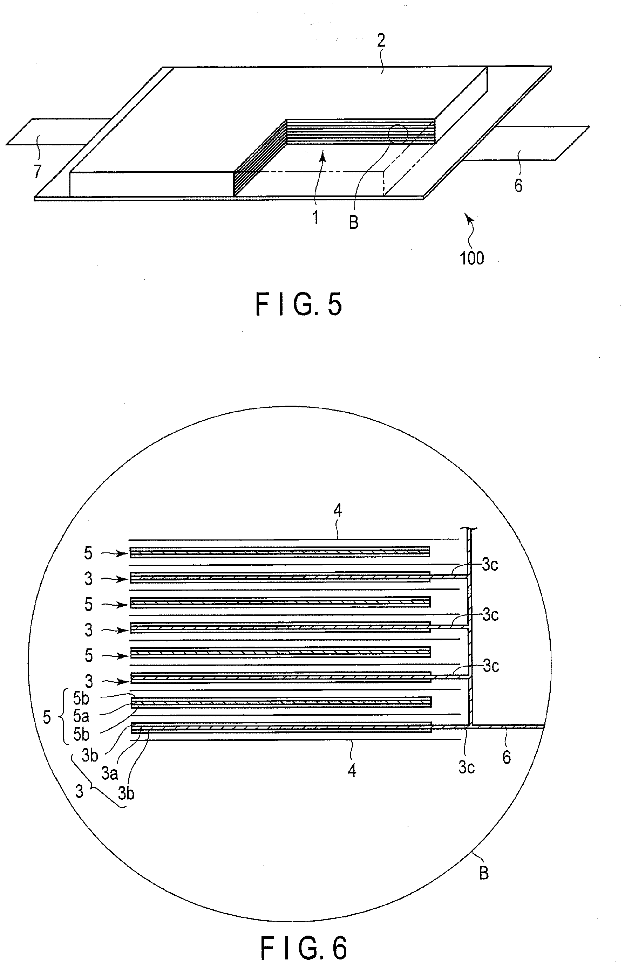

The secondary battery according to the approach is not limited to the secondary battery of the structure shown in FIGS. 3 and 4, and may be, for example, a battery of a structure as shown in FIGS. 5 and 6.

FIG. 5 is a partially cut-out perspective view schematically showing another example of the secondary battery. FIG. 6 is an enlarged cross-sectional view of section B of the secondary battery shown in FIG. 5.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 6, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the electrode according to the second approach. Thus, the secondary battery according to the third approach includes an electrode including the active material according to the first approach. Therefore, the secondary battery according to the third approach has superior rapid charge-discharge performance and cycle life performance.

### (Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the fourth approach will be described next, with reference to the drawings .

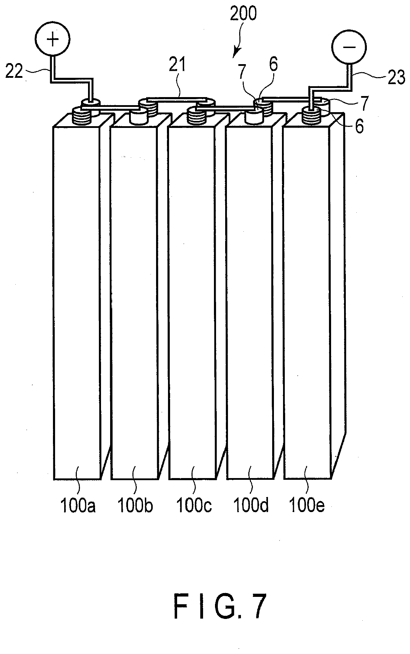

FIG. 7 is a perspective view schematically showing an example of the battery module. The battery module 200 shown in FIG. 7 includes five single-batteries 100a to 100e, four bus bars 21, a positive electrode-side lead 22, and a negative electrode-side lead 23. Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module has superior rapid charge-discharge performance and cycle life performance.

### (Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

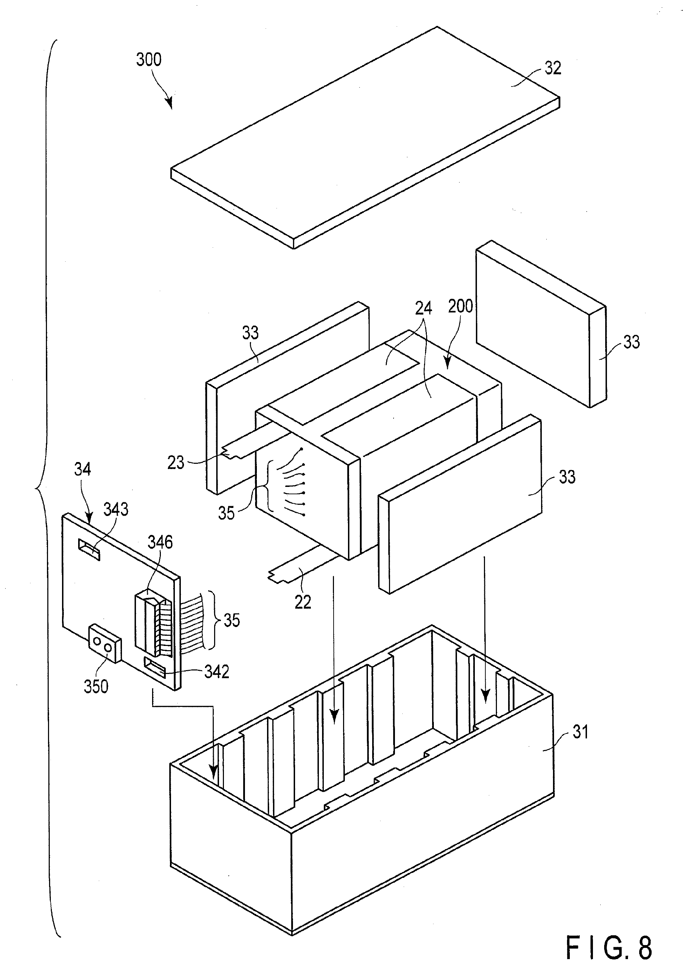

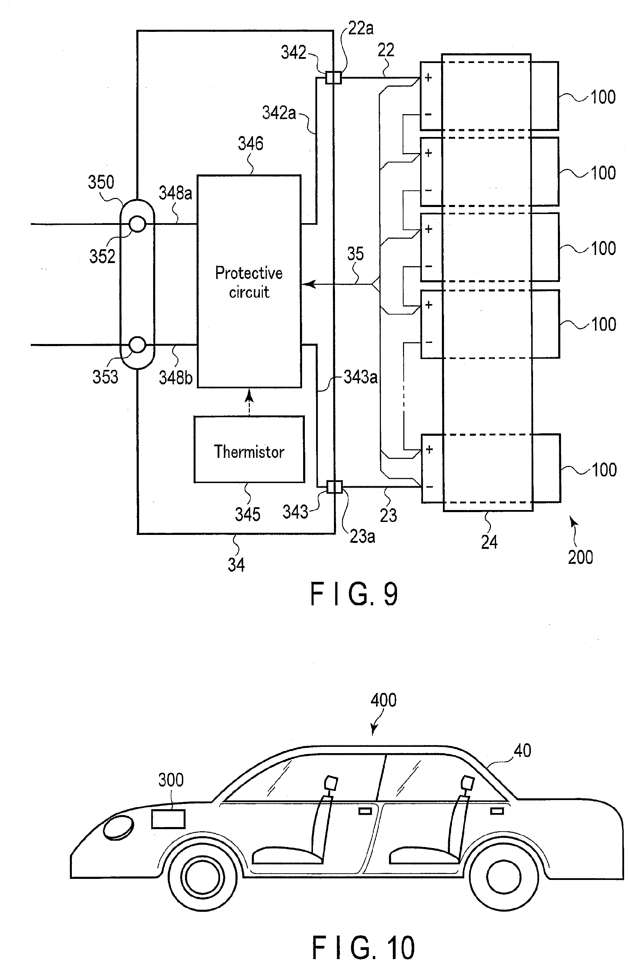

FIG. 8 is an exploded perspective view schematically showing an example of the battery pack. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 shown in FIG. 8 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device (s) that exists outside the battery pack 300 . The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device (s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack has superior rapid charge-discharge performance and cycle life performance.

### (Sixth Approach)

According to a sixth approach, a vehicle is provided. The battery pack according to the fifth approach is installed on this vehicle.

In the vehicle, the battery pack is configured, for example, to recover regenerative energy from motive force of the vehicle . The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 10 is a partially see-through diagram schematically showing an example of the vehicle.

A vehicle 400, shown in FIG. 10 includes a vehicle body 40 and a battery pack 300 according to the fifth approach. In the example shown in FIG. 10, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 10, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

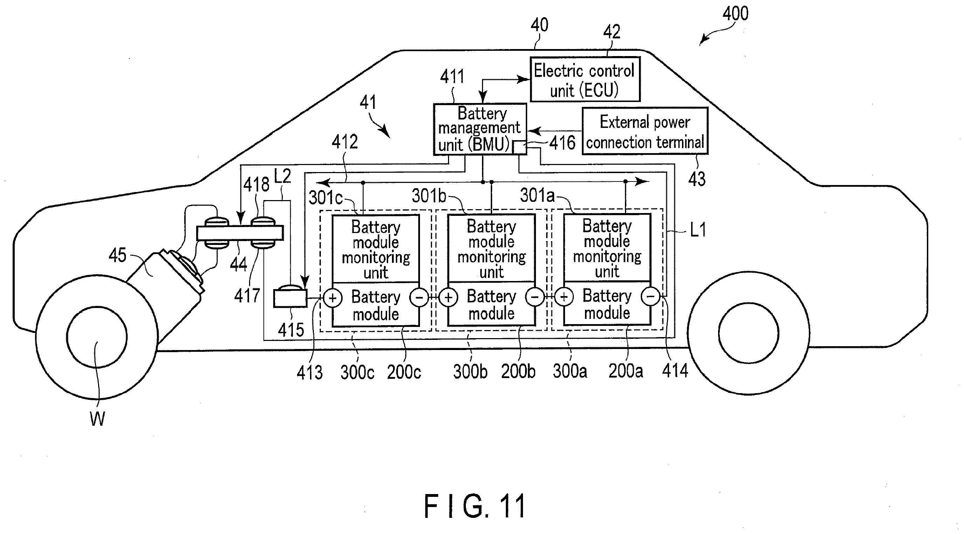

Next, with reference to FIG. 11, an aspect of operation of the vehicle according to the approach is explained.

FIG. 11 is a diagram schematically showing an example of a control system related to an electric system in the vehicle. A vehicle 400, shown in FIG. 11, is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series . At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 11) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41.

The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Since the battery pack has superior rapid charge-discharge performance, the vehicle can exhibit high performance. Since the battery pack has superior cycle life performance, reliability of the vehicle is high.

### Examples

Hereinafter, the approaches will be described in more detail based on Examples. It should be noted, however, that the present invention is not limited to the Examples described below.

### <Synthesis>

### (Example 1)

A titanium-niobium-molybdenum composite oxide was synthesized as described below.

As starting materials, niobium ammonium oxalate, ammonium molybdate, and titanium tetraisopropoxide were prepared. These starting materials were weighed out at a predetermined composition ratio. Niobium ammonium oxalate and ammonium molybdate were dissolved in pure water to thereby prepare solution A. Next, titanium tetraisopropoxide was put into an aqueous solution of oxalic acid of 1 M concentration and was dissolved therein by heating and stirring, to thereby prepare solution B. After the solutions A and B were mixed, an ammonia solution was added while heating and stirring to adjust the pH to 7, whereby a sol was obtained. The sol liquid was subjected to spray drying at a drying temperature of 180°C to thereby evaporate the solvent, whereby white precursor powder was obtained. The precursor powder was put into an alumina crucible, and then firing was performed at 700 °C for four hours. The fired product was then subjected to dry pulverization, and the pulverized products were subjected to sieving to adjust the particle size. Through the above procedure, an active material powder was obtained.

### (Example 2)

A composite oxide was synthesized to obtain an active material powder by the same method as that described in Example 1, except that the temperature of firing the precursor was changed to 800°C, yielding an active material powder.

### (Example 3)

A composite oxide was synthesized by the same method as that described in Example 1, except that the temperature of firing the precursor was changed to 900°C, yielding an active material powder.

### (Examples 4 to 7)

Composite oxides were synthesized by the same method as that described in Example 1, except that the weighed out ratios of the starting materials were adjusted to change the composition ratios of the precursor, and that the temperature of firing the precursor was changed as follows, yielding active material powders. The firing temperature was set to 700°C for Example 4, 750°C for Example 5, 800°C for Example 6, and 900°C for Example 7.

### (Comparative Example 1)

A composite oxide was synthesized by the same method as that described in Example 1, except that the temperature of firing the precursor powder was changed to 600°C, yielding an active material powder.

### <Measurement>

The powders obtained respectively in the above Examples and Comparative Example were subjected to scanning transmission electron microscope observation. Specifically, the fine structure was observed using a 10 nm × 10 nm image through the STEM-HAADF image having the spherical aberration correction function, as described in detail earlier. Furthermore, the measurement through wide-angle X-ray scattering method was performed. The measurement was performed according to the details described above. Based on the obtained spectra, an analysis of the crystal structures was performed according to the Rietveld method. Moreover, the ICP emission analysis, the HAXPES measurement, and Raman spectroscopy measurement were performed. A part of the measured results are described in detail.

For the composite oxide obtained in Example 1, the crystal structures shown in FIGS. 1 and 2 were confirmed to coexist.

The metal ratio of the composite oxide obtained in Example 1 was calculated through the ICP analysis, and was Ti:Nb:Mo = 0.23:1.00:0.18. The valence was evaluated through HAXPES measurement. Ti was identified as tetravalent because the peak top of the Ti2p_{3/2}-derived single peak was observed within the range of 459 ± 0.4 eV. Nb was identified as pentavalent because the peak top of the Nb5d_{3/2}-derived single peak was observed within the range of 207.5 ± 0.4 eV. Mo was identified as having the pentavalent peak and the hexavalent peak coexisting because the peak of Mo3d_{5/2} derived from the hexavalent was observed in 232.2 ± 0.3 eV and a different peak was confirmed as coexisting at a value 1 eV smaller than that peak. The average valence was assumed to be 5.3, presuming from the coexistence ratio of peaks that the pentavalent and hexavalent elements coexist at a ratio of 7:3. The composition formula calculated from this assumption was Ti_{0.23}NbMo_{0.18}O_{3.47}. Accordingly, b = 0.23, c = 0.18, and d = 3.47.

For the composite oxide obtained in Example 2, the crystal structures shown in FIGS. 1 and 2 were confirmed to coexist.

For the composite oxide obtained in Example 2, the metal ratio was calculated using the ICP analysis, and was Ti:Nb:Mo = 0.23:1.00:0.18. The valence was evaluated through HAXPES measurement in the same manner as in Example 1, and Ti was identified as tetravalent, Nb was identified as pentavalent, and Mo was identified as having the valence of 5.6. The composition formula calculated from the valences was Ti_{0.23}NbMo_{0.18}O_{3.49}. Accordingly, b = 0.23, c = 0.18, and d = 3.49.

As a result of the structural analysis, the composite oxide obtained in Example 3 was identified as a single phase of only the crystal structure shown in FIGS. 1.

For the composite oxide obtained in Example 3, the metal ratio was calculated using the ICP analysis, and was Ti:Nb:Mo = 0.23:1.00 : 0.15. The composition formula calculated from the number of elements and the crystal structure was Ti_{0.23}NbMo_{0.15}O_{3.45}. The valence was evaluated through HAXPES measurement by the same method as for Example 1, and Ti was identified as tetravalent, Nb was identified as pentavalent, and Mo was identified as hexavalent. The composition formula calculated from the valences was Ti_{0.23}NbMo_{0.15}O_{3.41}. Accordingly, b = 0.23, c = 0.15, and d = 3.41.

While the details are omitted, in Examples 4 and 5, the composite oxide in which the crystal structures of FIGS. 1 and 2 coexisted was obtained. In Examples 6 and 7, the composite oxide of the single phase of the crystal structure shown in FIG. 1 was obtained as in Example 3. The compositions represented by the general formula LiₐM_{b}NbMo_{c}O_{d} were those as shown in Table 1 below.

For the composite oxide obtained in Comparative Example 1, as a result of observing the fine structure through the STEM-HAADF image, confirmed was the crystal structure, in which the ReO₃ blocks had different sizes in the field of view and were connected via sharing the edges of the octahedra without periodicity. Therefore, the crystal structure was identified as the crystal structure shown in FIG. 2. In a different field of view, the connecting section via sharing vertices of the tetrahedra was also confirmed.

For the composite oxide obtained in Comparative Example 1, the metal ratio was calculated using the ICP analysis, and was Ti:Nb:Mo = 0.23:1.00:0.23. The valence was evaluated through HAXPES measurement in the same manner as in Example 1, and the Ti valence was identified as tetravalent, the Nb valence was identified as pentavalent, and the Mo valence was identified as 5.5. The composition formula calculated from the valences was Ti_{0.23}NbMo_{0.23}O_{3.59}. Accordingly, b = 0.23, c = 0.23, and d = 3.59.

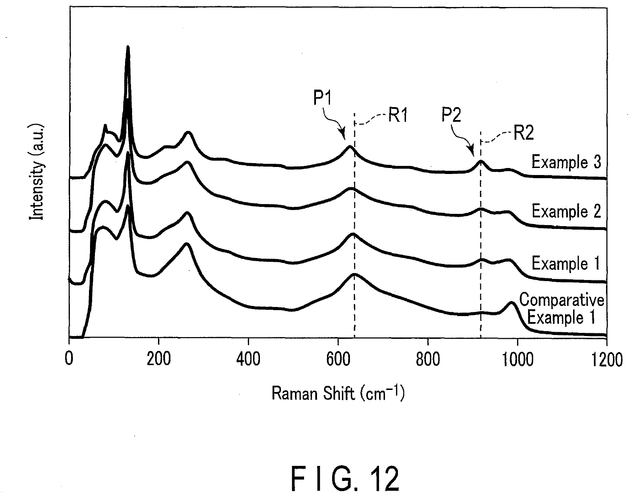

FIG. 12 shows the spectra obtained through micro-Raman spectrometry (excitation wavelength: 532 nm) for the composite oxides of Examples 1 to 3 and Comparative Example 1. In the figure, broken lines R1 and R2 respectively indicate the positions of shifts to 640 cm⁻¹ and 920 cm⁻¹ as a reference for making it easy to visually grasp the positions of the Raman peaks P1 and P2 in the lateral axis direction for each Example. As shown in FIG. 12, in the Raman spectra of all composite oxides, the peaks were observed at the shift of 640 ± 10 cm⁻¹ and 920 ± 20 cm⁻¹. Assuming the respective peaks as Raman peaks P1 and P2, Table 1 below shows the respective specific shifts (S1 and S2) . Table 1 also shows the shift amount difference S2-S1 and the composition formulae obtained by adding ICP analysis and HAXPES measurement.

**[Table 1]**

| | LiₐM_{b}NbMo_{c}O_{d} | | | | | S1 (cm⁻¹) | S2 (cm⁻¹) | S2-S1 (cm⁻¹) |
|---|---|---|---|---|---|---|---|---|
| | M | a | b | c | d | | | |
| Example 1 | Ti | 0 | 0.23 | 0.18 | 3.47 | 634 | 919 | 285 |
| Example 2 | Ti | 0 | 0.23 | 0.18 | 3.49 | 631 | 917 | 286 |
| Example 3 | Ti | 0 | 0.23 | 0.15 | 3.41 | 628 | 918 | 291 |
| Example 4 | Ti | 0 | 0.33 | 0.28 | 3.96 | 633 | 919 | 286 |
| Example 5 | Ti | 0 | 0.33 | 0.26 | 3.91 | 631 | 919 | 288 |
| Example 6 | Ti | 0 | 0.33 | 0.23 | 3.84 | 626 | 918 | 292 |
| Example 7 | Ti | 0 | 0.50 | 0.33 | 4.49 | 624 | 918 | 294 |
| Comparative Example 1 | Ti | 0 | 0.23 | 0.23 | 3.59 | 637 | 920 | 283 |

As shown by Table 1, for all of Examples 1 to 7 and Comparative Example 1, the composite oxide having the composition represented by the above-described general formula LiₐM_{b}NbMo_{c}O_{d} and including the rhenium oxide-block structure configured by the octahedral structures was synthesized. For Examples 1 to 7, the shift difference S2-S1 in the Raman spectrum was 285 cm⁻¹ or more. Thus, it is recognized that a lot of Schottky defects was introduced. In contrast, for Comparative Example 1, the shift difference S2-S1 remained less than 285 cm⁻¹.

### <Evaluation of Battery Performance>

The active material powders respectively obtained in the above Examples and the Comparative Example were used to produce electrodes, as described below.

First, 100 parts by mass of active material, 6 parts by mass of electro-conductive agent, and 4 parts by mass of binder were dispersed in a solvent to prepare a slurry. Each of the composite material powders obtained by the above method was used as the active material. A mixture of acetylene black and carbon nanotube as well as graphite was used as the electro-conductive agent. A mixture of carboxymethyl cellulose (CMC) and styrene-butadiene rubber (SBR) was used as the binder. Pure water was used as the solvent.

Then, the obtained slurry was applied onto one surface of a current collector and the coating was dried, to form an active material-containing layer. An aluminum foil having a thickness of 12 um was used as the current collector. Subsequently, the current collector and the active material-containing layer were pressed. An electrode was thus obtained. The mass per unit area of the electrode was 40 g/m².

A nonaqueous electrolyte was prepared as follows. An electrolyte salt was dissolved in an organic solvent to obtain a liquid nonaqueous electrolyte. LiPF₆ was used as the electrolyte salt. The molar concentration of LiPF₆ in the nonaqueous electrolyte was 1 mol/L. A mixed solvent of ethylene carbonate (EC) and diethyl carbonate (DEC) was used as the organic solvent. A volume ratio of EC and DEC was 1 : 2.

Three-electrode beaker cells were produced using the electrode obtained by the above-described method as a working electrode, using a metal lithium foil as a counter electrode and a reference electrode, and using the nonaqueous electrolyte prepared by the above-described method.

The cycle life performance and the discharge rate performance of the respective cells produced were evaluated as follows. The evaluation temperature was set to 25°C, and the charging and discharging was performed with the potential range set to a lower limit potential of 0.7 V (vs. Li/Li⁺) and an upper limit potential of 3.0 V (vs. Li/Li⁺) in terms of the lithium reference potential. The charging was performed in a constant current-constant voltage mode, and the discharging was performed in a constant current mode. The cycle life was evaluated by repeating the charge-discharge cycle at the current value of 1 C, and calculating the retention ratio of the discharge capacity from the first cycle to the 30th cycle (cycle capacity retention ratio (%) = [30^{th} cycle discharge capacity / 1^{st} cycle discharge capacity] × 100%). The discharge rate performance was evaluated by changing only the discharge current value while fixing the charge current at 1 C, and calculating the discharge capacity retention ratio at 5 C relative to the discharge capacity at 0.2 C (discharge rate capacity retention ratio (%) = [5C discharge capacity / 0.2C discharge capacity] × 100%). The respective capacity retention ratios calculated are summarized in Table 2 below.

**[Table 2]**

| | Cycle Capacity Retention Ratio (%) | Discharge Rate Capacity Retention Ratio (%) |
|---|---|---|
| Example 1 | 70 | 80 |
| Example 2 | 80 | 75 |
| Example 3 | 90 | 70 |
| Example 4 | 75 | 80 |
| Example 5 | 85 | 75 |
| Example 6 | 90 | 70 |
| Example 7 | 90 | 70 |
| Comparative Example 1 | 60 | 70 |

The composite oxide contained in the active material obtained in Examples 1 to 7 corresponded to the above-mentioned compound represented by the general formula LiₐM_{b}NbMo_{c}O_{d}, and in which the shift difference S2-S1 in the Raman spectrum was 285 cm⁻¹ or more. In contrast, while satisfying the above general formula, the composite oxide obtained in Comparative Example 1 did not meet the above-noted shift difference S2-S1. As shown in Table 2, the active materials of Examples 1 to 7 exhibited higher rapid-charge-and-discharge performance and cycle life performance as compared to those of the composite oxide of Comparative Example 1.

Specifically, the cycle capacity retention ratios of Examples 1 to 7 tended to improve by increasing the amount of defects in comparison to that of Comparative Example 1. This is considered to be caused by the electron conductivity improving as a result of including the defects in the structure, whereby the electrical conduction paths had been maintained during cycling. On the other hand, a tendency is seen in that, as the shift difference S2-S1 becomes larger, i.e. , the defects increase among Examples 1 to 7, the discharge rate retention ratio decreases. This is considered to be caused by Li dispersion being inhibited by inclusion of defects within the structure.

According to one or more approach and example described above, an active material including a composite oxide is provided. The composite oxide has a crystal structure that includes a rhenium oxide block structure including octahedral structures configured of oxygen and a metal element and being configured by the octahedral structure sharing vertices, and the composite oxide is represented by general formula LiₐM_{b}NbMo_{c}O_{d}. Here, M is one or more selected from the group consisting of Ti, V, Ta, Fe, Co, Mn, Ni, Bi, Sb, As, P, Cr, W, B, Na, K, Mg, Al, Ca, Y and Si. Each of the subscripts in the formula respectively satisfy relationships of 0 ≤ a ≤ b+2+3c, 0 ≤ b ≤ 1.5, 0 ≤ c ≤ 0.5, and 2.33 ≤ d/(1+b+c) ≤ 2.50. In a micro-Raman spectrum with an excitation wavelength of 532 nm, a difference S2-S1 between a shift S1 of a Raman peak P1 derived from Mo-O bonds appearing at 640 ± 10 cm⁻¹ and a shift S2 of a Raman peak P2 derived from Nb-O bonds appearing at 920 ± 20 cm⁻¹ is 285 cm⁻¹ or more. The active material can provide an electrode that can realize a secondary battery with superior rapid charge-discharge performance and cycle life performance, a secondary battery and battery pack with superior rapid charge-discharge performance and cycle life performance, and a vehicle installed with the battery pack.

The present disclosure also encompasses the following approaches of active materials, electrodes, secondary batteries, and such:
1. An active material comprising a composite oxide, the composite oxide having a crystal structure comprising a rhenium oxide block structure, the rhenium oxide block structure comprising octahedral structures configured of oxygen and a metal element and being configured by the octahedral structures sharing vertices, the composite oxide being represented by general formula LiₐM_{b}NbMo_{c}O_{d}, where M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.4, 0 ≤ c ≤ 0.5, and 2.33 ≤ d/ (1+b+c) ≤ 2.50, and in a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.
2. An active material comprising a composite oxide, the composite oxide having a crystal structure comprising a rhenium oxide block structure, the rhenium oxide block structure comprising octahedral structures configured of oxygen and a metal element and being configured by the octahedral structures sharing vertices, the composite oxide being represented by general formula LiₐM_{b}NbMo_{c}O_{d}, where M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.5, 0 ≤ c ≤ 0.5, and 2.33 ≤ d/ (1+b+c) ≤ 2.50, and in a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.
3. The active material according to clause 1 or 2, wherein the crystal structure includes plural rhenium oxide blocks of different sizes and a structure where the rhenium oxide blocks are connected via at least octahedral-edge sharing without having periodicity.
4. An electrode comprising the active material according to any one of clauses 1 to 3.
5. The electrode according to clause 4, comprising an active material-containing layer, the active material-containing layer containing the active material.
6. A secondary battery comprising:
   a positive electrode;
   a negative electrode; and
   an electrolyte,
   the positive electrode or the negative electrode comprising the electrode according to clause 4 or 5.
7. A battery pack comprising the secondary battery according to clause 6.
8. The battery pack according to clause 7, further comprising an external power distribution terminal and a protective circuit.
9. The battery pack according to clause 7 or 8, comprising plural of the secondary battery, the secondary batteries being electrically connected in series, in parallel, or in combination of in-series connection and in-parallel connection.
10. A vehicle comprising the battery pack according to any one of clauses 7 to 9.
11. The vehicle according to clause 10, wherein the vehicle comprises a mechanism configured to convert kinetic energy of the vehicle into regenerative energy.

While certain approaches have been described, these approaches have been presented by way of example only, and are not intended to limit the scope of the claims. Indeed, the active materials, electrodes, and the like described herein may be embodied in a variety of other forms; furthermore, various omissions, substitutions and changes in the form of the active materials, electrodes, and the like described herein may be made.

## Claims

1. An active material comprising a composite oxide, the composite oxide having a crystal structure (11) comprising a rhenium oxide block structure, the rhenium oxide block structure comprising octahedral structures (11a) configured of oxygen (19) and a metal element (18) and being configured by the octahedral structures (11a) sharing vertices,
the composite oxide being represented by general formula LiₐM_{b}NbMo_{c}O_{d}, where M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.4, 0 ≤ c ≤ 0.5, and 2.33 ≤ d/(1+b+c) ≤ 2.50, and
in a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.

2. An active material comprising a composite oxide, the composite oxide having a crystal structure (11) comprising a rhenium oxide block structure, the rhenium oxide block structure comprising octahedral structures (11a) configured of oxygen (19) and a metal element (18) and being configured by the octahedral structures (11a) sharing vertices,
the composite oxide being represented by general formula LiₐM_{b}NbMo_{c}O_{d}, where M is one or more selected from the group consisting of Ti, V, Ta, Fe, Co, Mn, Ni, Bi, Sb, As, P, Cr, W, B, Na, K, Mg, Al, Ca, Y and Si, 0 ≤ a ≤ b+2+3c, 0 ≤ b ≤ 1.5, 0 ≤ c ≤ 0.5, and 2.33 ≤ d/(1+b+c) ≤ 2.50, and
in a micro-Raman spectrum with an excitation wavelength of 532 nm for the composite oxide, a difference between a shift S1 of a Raman peak P1 derived from Mo-O bonds at 640 ± 10 cm⁻¹ and a shift S2 of a Raman peak P2 derived from Nb-O bonds at 920 ± 20 cm⁻¹ is 285 cm⁻¹ or more.

3. The active material according to claim 2, wherein the crystal structure (11) includes plural rhenium oxide blocks (15a-15g) of different sizes and a structure where the rhenium oxide blocks (15a-15g) are connected via at least octahedral-edge sharing (17) without having periodicity.

4. An electrode comprising the active material according to any one of claims 1 to 3.

5. The electrode according to claim 4, comprising an active material-containing layer, the active material-containing layer containing the active material.

6. A secondary battery (100) comprising:
a positive electrode (5);
a negative electrode (3); and
an electrolyte,
the positive electrode (5) or the negative electrode (3) comprising the electrode according to claim 4 or 5.

7. A battery pack (300) comprising the secondary battery (200) according to claim 6.

8. The battery pack (300) according to claim 7, further comprising an external power distribution terminal (350) and a protective circuit (346).

9. The battery pack (300) according to claim 7 or 8, comprising plural of the secondary battery (100) , the secondary batteries (100) being electrically connected in series, in parallel, or in combination of in-series connection and in-parallel connection.

10. A vehicle (400) comprising the battery pack (300) according to any one of claims 7 to 9.

11. The vehicle (400) according to claim 10, wherein the vehicle (400) comprises a mechanism configured to convert kinetic energy of the vehicle (400) into regenerative energy.
